# FASCICULE DE BREVET EUROPEEN

(11) **EP 1 959 860 B1**
(45) Date de publication et mention de la délivrance du brevet: **31.03.2010**
(21) Numéro de dépôt: 05815433.7
(22) Date de dépôt: 05.12.2005
(51) Int. Cl.: A61C 19/04

(54) **ACCESSOIRE POUR APPAREIL LOCALISATEUR D'APEX**
ZUBEHÖR FÜR EIN APEX-LOKALISATIONSGERÄT
ACCESSORY FOR APEX LOCATING APPARATUS

(43) Date de publication de la demande: 27.08.2008
(73) Titulaire: Bien-Air Holding SA, 2500 Bienne 6 (CH)
(72) Inventeur: MAÎTRE, Luc, CH-2885 Epauvillers (CH); BACHMANN, Robert, CH-2013 Colombier (CH)
(74) Mandataire: Ravenel, Thierry Gérard Louis
(86) Numéro de dépôt international: PCT/EP2005/013027
(87) Numéro de publication internationale: WO 2007/065454

(56) Documents cités:
- EP-A- 1 563 803
- WO-A-2005/070325
- PATENT ABSTRACTS OF JAPAN vol. 1999, no. 09, 30 juillet 1999 (1999-07-30) -& JP 11 099129 A (MARUYUU:KK), 13 avril 1999 (1999-04-13)

## Description

La présente invention concerne un accessoire pour appareil localisateur d'apex.

Le principal problème rencontré en endodontie lors d'un traitement de racine est de pouvoir atteindre le plus précisément possible le foramen apical de la racine sans le perforer. Il est donc nécessaire de pouvoir mesurer la longueur des canaux radiculaires. A cet effet, il existe plusieurs méthodes.

La plus connue et la plus répandue est l'approche tactile. Le praticien évalue la longueur du canal radiculaire au fur et à mesure qu'il fait pénétrer sa lime dans le canal. Cette technique manuelle ne nécessite aucun outillage spécial mais repose entièrement sur la dextérité du praticien.

Une autre méthode consiste à radiographier la dent à traiter. Par analyse de la radiographie, le praticien peut apprécier la géométrie des canaux radiculaires et repérer la position du foramen apical. Il n'est toutefois pas rare que la position de l'apex révélée par la radiographie ne coïncide pas avec la position du foramen apical anatomique, d'où des risques d'erreurs d'interprétation des radiographies.

Il existe enfin une troisième méthode qui fait appel à des localisateurs d'apex électroniques. Utilisés en endodontie depuis la fin des années soixante, ces appareils reposent sur le principe selon lequel les caractéristiques électriques d'un canal radiculaire humain sont identiques d'une personne à une autre. Ces appareils électroniques localisateurs d'apex peuvent être rangés en trois catégories selon la nature du paramètre électrique mesuré.

Une première catégorie de ces appareils fonctionne selon le principe de mesure d'une résistance. En effet, dès 1962, il a été montré que la résistance électrique d'un canal radiculaire humain s'élevait à 6.5kΩ. Ainsi, une résistance électrique constante de 6.5kΩ est obtenue entre une première électrode reliée à une lime d'endodontie au moment où celle-ci atteint l'apex anatomique et une seconde électrode reliée à une muqueuse orale.

Une seconde catégorie d'appareils localisateurs d'apex fonctionne selon le principe de la mesure d'impédance. En effet, on a observé que le canal radiculaire développait une impédance causée par la présence de dentine hyperminéralisée le long du canal, cette impédance augmentant tout au long du canal radiculaire pour atteindre son maximum au niveau de la constriction apicale. Dès qu'on touche le ligament, l'impédance chute, ce qui peut être détecté électroniquement.

Une troisième catégorie d'appareils localisateurs d'apex fonctionne selon le principe de la mesure de fréquence. Ces appareils mesurent l'impédance de la dentine du canal radiculaire en utilisant deux fréquences différentes et calculent le rapport des impédances résultantes. Au niveau de la partie coronaire de la dent, les impédances résultant des deux fréquences appliquées diffèrent peu, de sorte que leur rapport tend vers 1. Au niveau de la partie apicale de la dent, la différence d'impédance entre les deux fréquences augmente pour atteindre sa valeur maximale à la jonction cémento-dentinaire. A cet endroit, le rapport tend vers zéro.

Qu'il s'agisse d'appareils localisateurs d'apex reposant sur le principe de la mesure d'une résistance, d'une impédance ou d'une fréquence, il est nécessaire d'établir une connexion électrique entre l'appareil et l'outil du praticien d'une part, et entre le patient et ledit appareil d'autre part. Un tel câblage est schématiquement représenté à la figure 1 annexée à la présente demande de brevet sur laquelle est visible un système localisateur d'apex basé sur le principe de la mesure d'une résistance. Désigné dans son ensemble par la référence numérique 1, ce système comprend un appareil localisateur d'apex 2 qui peut fonctionner selon l'un quelconque des trois modes de détection de la position de l'apex d'une dent (résistance, impédance ou fréquence) et qui est relié à une lime d'endodontie 4 par une électrode 6 et à un terminal de contact 8 par une électrode 10. Le terminal de contact 8 est conformé en crochet pour pouvoir être par exemple accroché à la lèvre 9 du patient. Il va de soi que la lime d'endodontie 4 peut être remplacée par un contre-angle si le praticien procède à une intervention mécanisée et non manuelle. On a donc deux fils qui courent depuis l'appareil de mesure de la résistance: l'un qui relie l'appareil à la lime ou au contre-angle et l'autre qui relie l'appareil au patient. La présence de ces deux fils peut être gênante pour le praticien qui est limité dans ses mouvements et qui risque de rester accroché à l'un de ces fils. Pour remédier à ce problème, il a déjà été prévu de munir un contre-angle de moyens de fixation du fil qui le relie à l'appareil localisateur d'apex. Mais dans ce cas, le praticien est obligé de faire l'acquisition d'un contre-angle uniquement destiné à l'endodontie, ce qui est coûteux.

Le document EP 1 563 803 A1 décrit un appareil localisateur d'apex comportant un posage sur la dent à traiter et une électrode séparée tous deux reliés au même appareil de mesure. Le document JP 11-099129 A décrit un appareil localisateur d'outil d'endodontie.

La présente invention a pour but de remédier aux inconvénients susmentionnés ainsi qu'à d'autres encore en procurant un accessoire pour appareil localisateur d'apex qui permet notamment de limiter la gêne occasionnée par les fils de connexion électrique.

A cet effet, la présente invention concerne un accessoire pour appareil localisateur d'apex, caractérisé en ce qu'il comprend un posage maintenu à l'aide de moyens de fixation sur la dent à traiter ou sur une dent voisine et qui comporte des moyens pour la connexion électrique entre l'appareil localisateur d'apex et l'outil d'endodontie.

Selon un premier mode de réalisation de l'invention, les moyens de connexion électrique sont des moyens de liaison sans fil.

Grâce à ces caractéristiques, la présente invention procure un accessoire pour appareil localisateur d'apex qui permet de s'affranchir totalement de toute liaison filaire entre l'outil d'endodontie et l'appareil localisateur d'apex d'une part, et entre ledit appareil localisateur d'apex et le patient d'autre part, de sorte que le praticien est complètement libre de ses mouvements, ne risquant pas de rester accroché à un fil. Par ailleurs, le posage est de type universel, pouvant être employé avec tout type d'appareil localisateur d'apex, indépendamment du principe de détection retenu. Le posage selon l'invention ne nécessite pas non plus l'utilisation d'un outil d'endodontie spécifique, ce qui permet au praticien de réaliser des économies substantielles. Enfin, le posage selon l'invention sera préférentiellement à usage unique, ce qui permet d'éviter les problèmes liés à la stérilisation de l'outillage dentaire après utilisation.

Selon un second mode de réalisation de l'invention, le posage comporte des premiers moyens pour la connexion électrique filaire entre l'appareil localisateur d'apex et l'outil d'endodontie, et des seconds moyens pour la connexion électrique filaire entre ledit appareil et le patient.

Grâce à ces caractéristiques, la présente invention procure un posage qui regroupe les moyens de connexion électrique entre l'appareil localisateur d'apex et l'outil d'endodontie d'une part, et entre ce même appareil et le patient d'autre part. Les deux fils de raccordement qui courent entre l'appareil localisateur d'apex et le posage peuvent donc être réunis dans une même gaine, ce qui libère les mouvements du praticien en évitant en particulier à celui-ci de rester accroché à un fil.

Le posage peut être maintenu au moyen d'une bride de serrage. Il peut s'agir d'une pièce spécialement conçue pour le maintien du posage selon l'invention. Toutefois, on préférera recourir à la bride de serrage dont tout praticien dispose et qui est couramment utilisée pour poser des amalgames dentaires, ce qui permet d'éviter de multiplier le nombre de pièces nécessaires pour la mise en oeuvre de l'invention.

Le posage peut également être maintenu au moyen d'une pièce élastiquement déformable. L'avantage d'une telle pièce réside dans le fait qu'elle est auto-serrante, autrement dit qu'elle maintient spontanément le posage contre la dent par déformation élastique, sans qu'il soit nécessaire de visser ou de serrer de quelque manière que se soit. Une telle pièce rend donc la fixation du posage plus simple et plus rapide.

Selon une caractéristique complémentaire de l'invention, le posage comprend une première lame de contact pour permettre d'établir le contact électrique entre le patient et l'appareil localisateur d'apex, et de moyens pour permettre d'établir une liaison électrique entre l'outil d'endodontie et ledit appareil localisateur d'apex, la lame de contact et les moyens de liaison étant reliés à un connecteur électrique que comprend le posage et sur lequel viennent se brancher les liaisons filaires entre ledit localisateur d'apex et ledit posage.

Selon une première variante de réalisation, les moyens de liaison électrique entre l'outil d'endodontie et l'appareil localisateur d'apex se présentent sous la forme d'une bride qui assure le contact par déformation élastique.

Selon une seconde variante de réalisation, les moyens de liaison électrique entre l'outil d'endodontie et l'appareil localisateur d'apex se présentent sous la forme d'une bobine d'induction qui entoure l'outil de manière à assurer une liaison sans contact.

D'autre caractéristiques et avantages de la présente invention ressortiront plus clairement de la description détaillée qui suit d'un exemple de réalisation du posage selon l'invention, cet exemple étant donné à titre purement illustratif et non limitatif seulement, en liaison avec le dessin annexé sur lequel:
- la figure 1, déjà citée, est une représentation schématique de la connexion filaire d'un appareil localisateur d'apex selon l'art antérieur;
- la figure 2A, est une vue en perspective de la face postérieure d'une dent équipée d'un posage selon l'invention maintenu contre la dent au moyen d'une bride de serrage;
- la figure 2B est une vue en perspective de la face antérieure de la dent représentée à la figure 2A;
- la figure 2C est une vue en coupe transversale de la dent et de son posage représentés aux figures 2A et 2B;
- les figures 3A, 3B et 3C sont des vues analogues à celles des figures 2A, 2B et 2C respectivement, le posage étant maintenu contre la dent au moyen d'une bride capable de se déformer élastiquement;
- les figures 4A, 4B et 4C sont des vues analogues à celles des figures 2A, 2B et 2C respectivement sur lesquelles les moyens de liaison électrique entre l'outil d'endodontie et l'appareil localisateur d'apex se présentent sous la forme d'une bobine d'induction qui entoure l'outil de manière à assurer une liaison sans contact, et
- la figure 5 est une vue en perspective montrant la connexion sans fil entre l'appareil localisateur d'apex et le posage selon l'invention.

La présente invention procède de l'idée générale inventive qui consiste à procurer un accessoire pour un appareil localisateur d'apex, cet accessoire se présentant généralement sous la forme d'un posage maintenu contre la dent à traiter ou contre une dent voisine par des moyens appropriés et qui comprend des moyens pour sa connexion avec l'appareil localisateur d'apex. Dans son acception la plus générale, la liaison entre ledit appareil localisateur d'apex et ledit posage est une liaison sans fil, par exemple par ondes radiofréquence, ce qui élimine tout problème de connexion filaire et procure au praticien une totale liberté de mouvement. Dans une approche simplifiée de l'invention, le posage comprend des moyens de connexion filaire entre l'appareil localisateur d'apex et l'outil d'éndodontie d'une part, et entre ledit appareil et le patient d'autre part. En regroupant ainsi la connectique liée à l'utilisation d'un appareil localisateur d'apex dans un élément discret placé dans la bouche du patient, on peut regrouper les fils de liaison électrique en un seul faisceau, ce qui rend plus facile le travail du praticien qui est moins gêné par les fils et qui est plus libre de ses mouvements. D'autre part, le posage selon l'invention peut être utilisé avec tout type d'appareil localisateur d'apex fonctionnant selon l'un quelconque des trois modes de détection connus basés soit sur la mesure d'une résistance, soit sur la mesure d'une impédance, soit sur la mesure d'une fréquence, et ne nécessite l'acquisition d'aucun outillage spécifique.

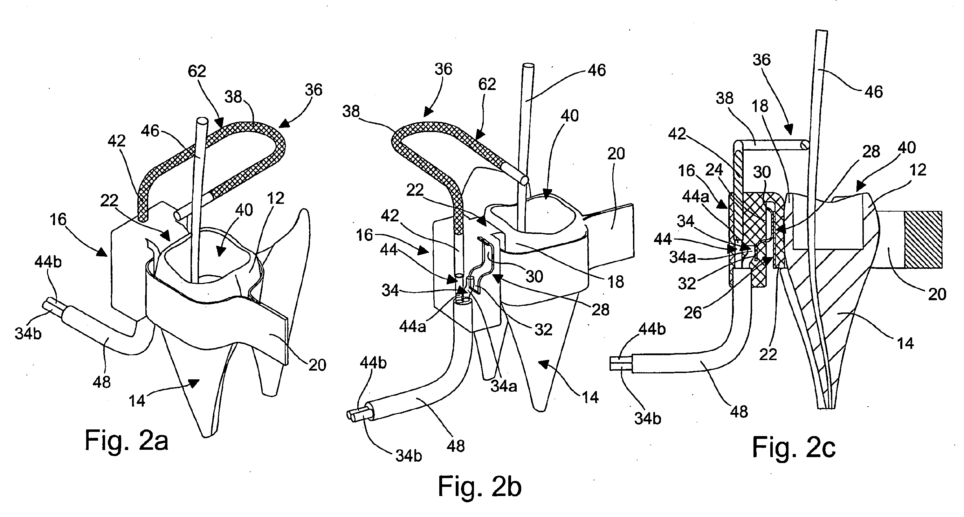

Les figures 2A à 2C sont des vues qui illustrent un premier mode de réalisation de la présente invention. La figure 2A est une vue en perspective du côté de la face postérieure 12 d'une dent à traiter 14. Cette dent 14 est équipée d'un posage selon l'invention désigné dans son ensemble par la référence numérique générale 16. Comme on peut le voir à l'examen de la figure 2A et mieux encore sur la figure 2B qui est une vue en perspective du côté de la face antérieure 18 de la dent 14, le posage 16 est une pièce parallélépipédique de dimensions compatibles avec celle de la dent 14 et maintenue contre ladite dent 14 au moyen d'une bride de serrage 20. Cette bride de serrage 20 peut être spécialement conçue pour le maintien du posage 16 selon l'invention. Toutefois, selon une variante préférée de l'invention, la bride de serrage 20 est du genre dont tout praticien dispose et qui est habituellement utilisée pour la pose d'amalgames dentaires. La bride de serrage 20 est passée autour de la dent 14, puis le posage 16 est accroché sur ladite bride 20 par l'intermédiaire de moyens d'accrochage 22 du genre d'une languette qui est glissée entre la bride 20 et la dent 14. Finalement, on resserre la bride 20 pour maintenir fermement le posage 16 contre la dent 14.

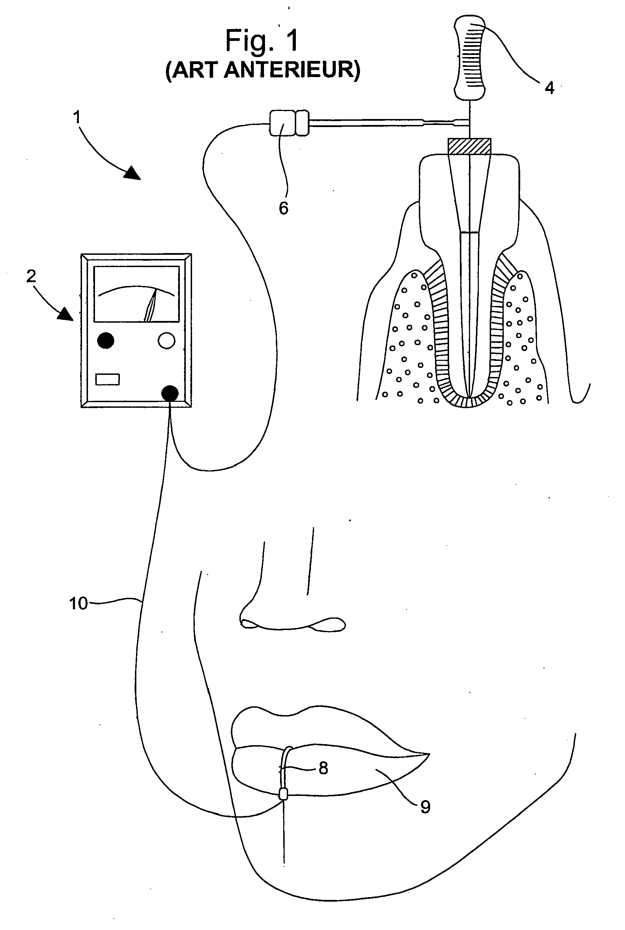

La languette d'accrochage 22 s'étend parallèlement et à distance de la face postérieure 24 du posage 16, délimitant ainsi un interstice 26 dans lequel une première lame de contact 28 fait saillie (voir figure 2C). Cette lame de contact 28 est une pièce à ressort sensiblement en forme de Z moulée dans la masse du posage 16 et comprenant deux pattes de contact 30 et 32, la première 30 étant en contact avec la bride de serrage 20, tandis que la seconde 32 est en contact avec un fil de connexion électrique 34. Une première extrémité 34a de ce fil 34 est moulée dans la masse du posage 16, tandis que la seconde extrémité 34b est destinée à être connectée à l'appareil localisateur d'apex 2 représenté à la figure 1. La bride de serrage 20 étant elle-même en contact avec la dent 14, on réalise ainsi la connexion électrique entre le patient et l'appareil localisateur d'apex.

Le posage 16 comprend une seconde lame de contact 36. Il s'agit d'une bride de contact comprenant une branche 38 en forme générale de U qui s'étend sensiblement parallèlement à la face supérieure 40 de la dent et qui se prolonge verticalement par un pied 42 dont l'extrémité libre est moulée dans la masse du posage 16. Le pied 42 de la bride de contact 36 est en contact avec un fil de connexion électrique 44 dont une première extrémité 44a est moulée dans la masse du posage 16, tandis que la seconde extrémité 44b est destinée à être connectée à l'appareil localisateur d'apex. Pendant le traitement, le praticien prendra soin d'appliquer son outil 46 contre la bride de contact 36 de façon à réaliser la connexion électrique entre ledit outil 46 et l'appareil localisateur d'apex. L'outil 46 peut être un outil à main ou un contre-angle. On peut envisager que l'appareil localisateur d'apex émette un signal lumineux ou acoustique pour indiquer au praticien que l'outil 46 est bien en contact avec la bride 36. On remarquera que les deux fils de connexion électrique 34 et 44 sont réunis dans une même gaine 48, ce qui facilite les mouvements du praticien en lui évitant notamment de rester accroché à un fil. Bien entendu, selon une variante, il peut être envisagé de munir les extrémités 34a, 44a des fils de connexion 34, 44 de fiches que l'on engagerait dans des prises correspondantes moulées dans la masse du posage 16. De même, la bride 36 pourrait être enfichée sur le posage 16. Dans ce cas, il faudrait prévoir des moyens détrompeurs pour convenablement orienter ladite bride 36.

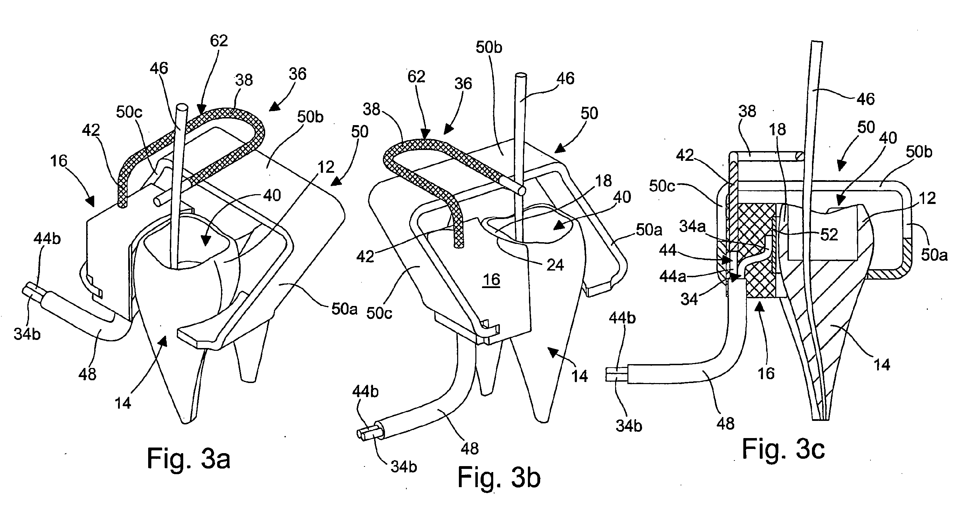

On examine en liaison avec les figures 3A à 3C une variante de réalisation des moyens de maintiens du posage 16 contre la dent 14. Selon cette variante, les moyens de maintien comprennent une pièce 50 sensiblement en forme de U comportant une première portion 50a qui vient en appui contre la face postérieure 12 de la dent 14 et qui est reliée par une portion de liaison 50b à une deuxième portion 50c qui vient en appui contre le posage 16 pour maintenir celui-ci plaqué contre la face antérieure 18 de la dent 14 par effet de déformation élastique. L'avantage de ce mode de réalisation est qu'il ne nécessite aucun outil pour la fixation du posage 16 contre la dent 14. Les éléments identiques à ceux décrits en liaison avec les figures 2A à 2C sont désignés par les mêmes références numériques sur les figures 3A à 3C et ne seront donc pas à nouveau décrits ici. On remarque la présence d'un insert métallique 52 moulé dans la masse du posage 16 et qui est en contact d'une part avec l'extrémité 44a du fil de connexion électrique, et d'autre part avec la dent 14 pour assurer la liaison électrique entre le patient et l'appareil localisateur d'apex. On remarque également que la face postérieure 24 du posage 16 est incurvée pour s'adapter au mieux au profil de la dent 14.

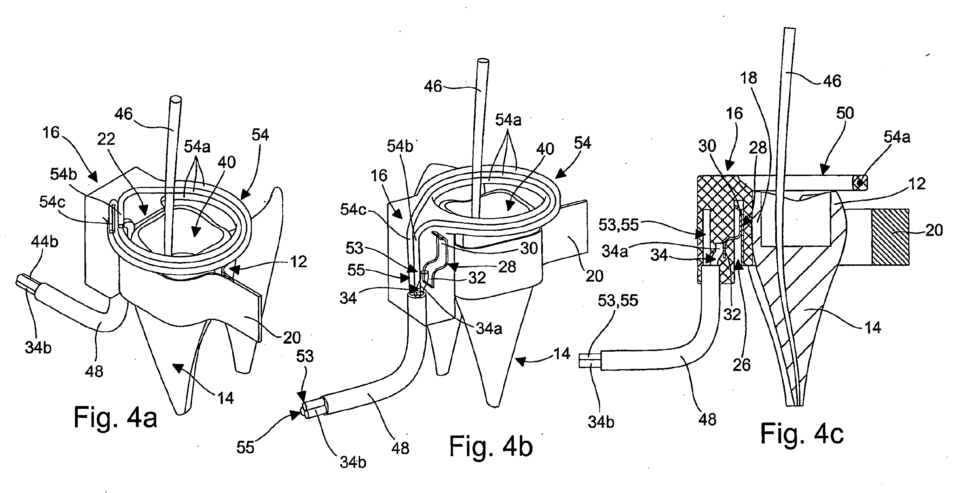

On examine maintenant en liaison avec les figures 4A à 4C une variante de réalisation des moyens de connexion électrique entre l'outil d'endodontie 4 et l'appareil localisateur d'apex. Les éléments identiques à ceux décrits en liaison avec les figures 2A à 2C seront désignés par les mêmes références numériques et ne seront pas davantage décrits dans ce qui suit. Conformément à ce mode de réalisation, les moyens de connexion électrique comprennent une bobine d'induction 54. Les spires 54a de la bobine 54 s'étendent autour de la dent 14 dans des plans sensiblement parallèles à la face supérieure 40 de la dent 14. Les deux extrémités 54b et 54c de la bobine 54 sont moulées dans la masse du posage 16 et sont en contact électrique avec deux fils de connexion électrique 53 et 55. En faisant circuler un courant alternatif dans les spires 54a de la bobine 54, on crée un champ magnétique variable qui induit dans l'outil 4 un courant. Le circuit se referme par le biais de l'outil 4 qui, en venant en contact avec la dent 14, permet au courant de circuler via le fil de connexion électrique 34. Il est ainsi possible d'induire un courant dans l'outil 4 sans contact, ce qui simplifie considérablement le travail du praticien.

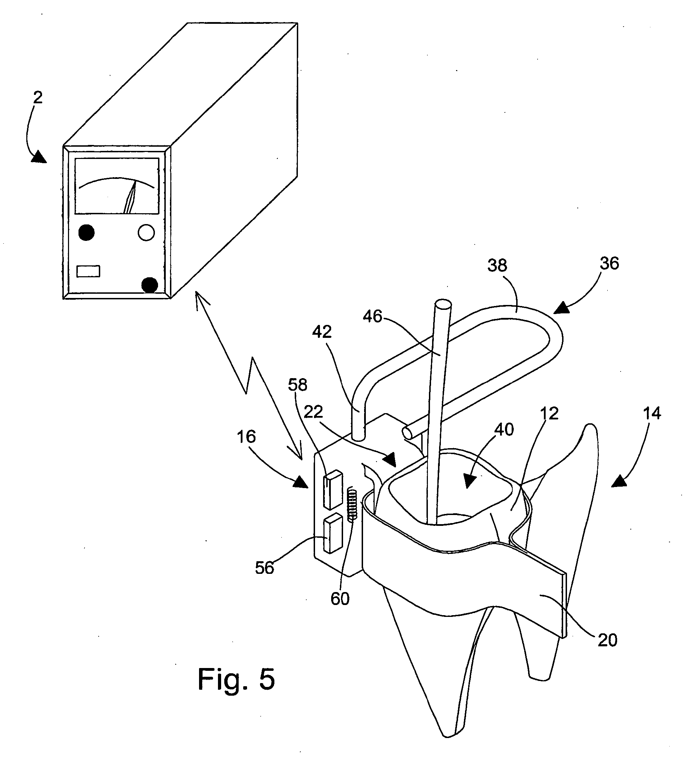

Il va de soi que la présente invention n'est pas limitée aux modes de réalisation qui viennent d'être décrits, et que diverses modifications et variantes simples peuvent être envisagées par l'homme du métier sans sortir du cadre de l'invention tel que défini par les revendications annexées. En particulier, il peut être envisagé de supprimer complètement toute liaison filaire entre le posage 16 et l'appareil localisateur d'apex 2 comme illustré à la figure 5. Dans ce cas; les moyens pour la connexion entre l'appareil localisateur d'apex 2 et le posage 16 sont des moyens de connexion sans fil, par exemple par ondes radiofréquence. Le posage 16 comprendra ainsi typiquement au moins une électronique de mesure comportant un circuit 56 de mesure du paramètre physique représentatif de la position relative de l'outil d'endodontie 46 et de l'apex de la dent 14, ce circuit de mesure 56 étant notamment associé à un convertisseur analogique/numérique permettant de générer un signal de mesure numérique. Le posage comprendra également un circuit émetteur/récepteur 58 pour l'échange de signaux électromagnétiques avec l'appareil localisateur d'apex 2. Ce dernier devra être légèrement modifié pour pouvoir émettre des signaux en direction du posage 16 et être capable de capter les signaux émis par ledit posage 16 et de les traiter afin de pouvoir fournir une information visuelle et/ou acoustique représentative de la position de l'outil d'endodontie 46 relativement à l'apex de la dent 14. Ceci nécessitera une adaptation du localisateur d'apex 2 dans une mesure qui est à la portée de l'homme du métier et qui ne sera donc pas décrite plus en détail ici. Le traitement du signal émis par le posage 16 peut se faire au niveau du localisateur d'apex 2. Les circuits de mesure 56 et émetteur/récepteur 58 peuvent être de type passif. Autrement dit, ils seront alimentés par un courant induit dans une bobine 60 par le signal d'interrogation émis par l'appareil localisateur d'apex 2. Bien entendu, il peut également être prévu que le posage 16 comprenne sa propre source d'énergie. Il peut également être envisagé de fixer le posage 16 selon l'invention sur la face postérieure de la dent 14 à traiter ou d'une dent voisine. On peut également prévoir de munir la lame de contact 36 d'une gaine isolante 62 sur toute sa longueur sauf à l'endroit où elle est en contact avec l'outil 46 pour éviter les risques de court-circuit entre la dent 14 et la joue du patient.

## Revendications

1. Accessoire pour appareil localisateur d'apex, **caractérisé en ce qu'**il comprend un posage (16) maintenu à l'aide de moyens de fixation (20, 50) sur la dent à traiter ou sur une dent voisine (14) et qui renferme à la fois des moyens pour transmettre un signal entre l'appareil localisateur d'apex (2) et l'outil d'endodontie (46) d'une part, et des moyens pour transmettre un signal entre ce même appareil et la dite dent du patient d'autre part.

2. Accessoire pour appareil localisateur d'apex selon la revendication 1,
**caractérisé en ce que** les moyens de transmission du signal sont des moyens de transmission sans fil.

3. Accessoire pour appareil localisateur d'apex selon la revendication 2,
**caractérisé en ce que** le posage (16) comprend au moins un circuit (56) de mesure du paramètre physique lié à la position relative de l'outil d'endodontie (46) et de l'apex de la dent à traiter, ce circuit de mesure (56) étant associé à un circuit émetteur/récepteur (56) pour l'échange de signaux avec l'appareil localisateur d'apex (2)

4. Accessoire pour appareil localisateur d'apex selon la revendication 3,
**caractérisé en ce que** le circuit de mesure (56) et le circuit émetteur/récepteur (58) sont des circuits alimentés par induction.

5. Accessoire pour appareil localisateur d'apex selon la revendication 3,
**caractérisé en ce que** le posage (16) comprend sa propre source d'énergie.

6. Accessoire pour appareil localisateur d'apex selon la revendication 1,
**caractérisé en ce qu'**il comporte des premiers moyens (36, 54) pour la connexion électrique filaire (44) entre l'appareil localisateur d'apex (2) et l'outil d'endodontie (46), et des seconds moyens (28, 52) pour la connexion électrique filaire (34) entre ledit appareil (2) et le patient.

7. Accessoire pour appareil localisateur d'apex selon l'une quelconque des revendications 1 à 6, **caractérisé en ce que** le posage (16) est maintenu au moyen d'une bride de serrage (20).

8. Accessoire pour appareil localisateur d'apex selon l'une quelconque des revendications 1 à 6, **caractérisé en ce que** le posage (16) est maintenu au moyen d'une pièce élastiquement déformable (50).

9. Accessoire pour appareil localisateur d'apex selon la revendication 8,
**caractérisé en ce que** la pièce de maintien (50) comprend une première portion (50a) qui vient en appui contre la face postérieure (12) de la dent (14) et qui est reliée par une portion de liaison (50b) à une deuxième portion (50c) qui vient en appui contre le posage (16) pour maintenir celui-ci plaqué contre la face antérieure (18) de la dent (14).

10. Accessoire pour appareil localisateur d'apex selon la revendication 9.
**caractérisé en ce que** la pièce de maintien (50) est une pièce en forme de U.

11. Accessoire pour appareil localisateur d'apex selon l'une quelconque des revendications 6 à 10, **caractérisé en ce que** le posage (16) comprend une première lame de contact (28) pour permettre d'établir le contact électrique entre le patient et l'appareil localisateur d'apex (2) et des moyens pour permettre d'établir une liaison électrique entre l'outil d'endodontie (46) et ledit appareil localisateur d'apex (2), la lame de contact (28) et les moyens de liaison électrique étant raccordés à des fils de connexion électrique (34, 44) qui relient ledit appareil localisateur d'apex (2) audit posage (16).

12. Accessoire pour appareil localisateur d'apex selon la revendication 11 dépendant de la revendication 7, **caractérisé en ce que** la première lame de contact (28) vient en contact avec la bride de serrage (20).

13. Accessoire pour appareil localisateur d'apex selon la revendication 12,
**caractérisé en ce que** le posage (16) comprend une rainure (26) dans laquelle est passée la bride de serrage (20), la première lame de contact (28) débouchant dans cette rainure (26) pour venir en contact avec ladite bride de serrage (20).

14. Accessoire pour appareil lacalisateur d'apex selon la revendication 11 dépendant de l'une quelconque des revendications 8 à 10, **caractérisé en ce que** la première lame de contact (28) vient en contact via la dent (14) sur laquelle le posage (16) est fixé avec la pièce élastiquement déformable (50).

15. Accessoire pour appareil localisateur d'apex selon la revendication 14,
**caractérisé en ce que** le posage (16) comprend un insert métallique (52) qui permet d'assurer la liaison électrique entre la première lame de contact (28) et la dent (14) sur laquelle le posage (16) est fixé.

16. Accessoire pour appareil localisateur d'apex selon l'une quelconque des revendications 11 à 15, **caractérisé en ce que** les moyens de liaison électrique comprennent une secondé lame de contact électrique (36).

17. Accessoire pour appareil localisateur d'apex selon la revendication 16.
**caractérisé en ce que** la seconde lame de contact électrique (36) est une bride de contact électrique qui s'étend tangentiellement à l'outil d'endodontie (46).

18. Accessoire pour appareil localisateur d'apex selon la revendication 17,
**caractérisé en ce que** la lame de contact électrique (36) est munie d'une gaine isolante (62) sur une partie de sa longueur.

19. Accessoire pour appareil localisateur d'apex selon l'une quelconque des revendications 11 à 15, **caractérisé en ce que** les moyens de liaison électrique comprennent une bobine d'induction (54) qui s'étend autour de l'outil d'endodontie (46).

20. Accessoire pour appareil localisateur d'apex selon l'une quelconque des revendications 16 à 19, **caractérisé en ce que** la seconde lame de contact électrique (36) et la bobine d'induction (54) peuvent être connectés sur le posage (16) ou être moulés dans la masse de celui-ci.

21. Accessoire pour appareil localisateur d'apex selon l'une quelconque des revendications 1 à 20, **caractérisé en ce que** le posage (16) présente une face incurvée pour épouser la forme de la face antérieure (18) de la dent (14) contre laquelle il est fixé.

22. Accessoire pour appareil localisateur d'apex selon l'une quelconque des revendications 1 à 21, **caractérisé en ce que** le posage (16) est réalisé en un matériau biologiquement compatible.

## Claims

1. Accessory for apex locator apparatus, **characterized in that** it includes an fitting (16) held using securing means (20, 50) on the tooth to be treated or on a neighbouring tooth (14) and which at the same time encloses means for transmitting a signal between the apex locator apparatus (2) and the endodontic tool (46) on the one hand, and means for transmitting a signal between this same apparatus and said tooth of the patient on the other hand.

2. Accessory for apex locator apparatus according to claim 1,
**characterized in that** the signal transmission means are wireless transmission means.

3. Accessory for apex locator apparatus according to claim 2,
**characterized in that** the fitting (16) includes at least one circuit (56) for measuring the physical parameter linked to the relative position of the endodontic tool (46) and the apex of the tooth to be treated, said measuring circuit (56) being associated with a transceiver circuit (58) for exchanging signals with the apex locator apparatus (2).

4. Accessory for apex locator apparatus according to claim 3,
**characterized in that** the measuring circuit (56) and the transceiver circuit (58) are induction powered circuits.

5. Accessory for apex locator apparatus according to claim 3,
**characterized in that** the fitting (16) includes its own source of energy

6. Accessory for apex locator apparatus according to claim 1,
**characterized in that** it includes first means (36, 54) for the wired electrical connection (44) between the apex locator apparatus (2) and the endodontic tool (46), and second means (28, 52) for the wired electrical connection (34) between said apparatus (2) and the patient.

7. Accessory for apex locator apparatus according to any of claims 1 to 6, **characterized in that** the fitting (16) is held by means of a tightening band (20).

8. Accessory for apex locator apparatus according to any of claims 1 to 6, **characterized in that** the fitting (16) is held by means of an elastically deformable part (50).

9. Accessory for apex locator apparatus according to claim 8,
**characterized in that** the holding part (50) includes a first portion (50a) which abuts against the posterior face (12) of the tooth (14) and which is connected by a connecting portion (50b) to a second portion (50c) which abuts against the fitting (16) to hold the latter pressed against the anterior face (18) of the tooth (14).

10. Accessory for apex locator apparatus according to claim 9,
**characterized in that** the holding part (50) is a U-shaped part.

11. Accessory for apex locator apparatus according to any of claims 6 to 10, **characterized in that** the fitting (16) includes a first contact strip (28) for establishing the electrical contact between the patient and the apex locator apparatus (2) and means for establishing an electrical connection between the endodontic tool (46) and said apex locator apparatus (2), the contact strip (28) and the electrical connecting means being connected to electrical connecting wires (34, 44), which connect said apex locator apparatus (2) to said fitting (16).

12. Accessory for apex locator apparatus according to claim 11, dependent upon claim 7, **characterized in that** the first contact strip (28) comes into contact with the tightening band (20).

13. Accessory for apex locator apparatus according to claim 12,
**characterized in that** the fitting (16) includes a groove (26) into which the tightening band (20) passes, the first contact strip (28) opening into said groove (26) to come into contact with said tightening band (20).

14. Accessory for apex locator apparatus according to claim 11, dependent upon any of claims 8 to 10, **characterized in that** the first contact strip (28) comes into contact with the elastically deformable art (50) via the tooth (14) on which the fitting (16) is fixed.

15. Accessory for apex locator apparatus according to claim 14,
**characterized in that** the fitting (16) includes a metal fitting (52) that ensures the electrical connection between the first contact strip (28) and the tooth (14) on which the fitting (16) is fixed.

16. Accessory for apex locator apparatus according to any of claims 11 to 15, **characterized in that** the electrical connecting means include a second electrical contact strip (36).

17. Accessory for apex locator apparatus according to claim 16,
**characterized in that** the second electrical contact strip (36) is an electric contact flange which extends tangentially to the endodontic tool (46).

18. Accessory for apex locator apparatus according to claim 17,
**characterized in that** the electrical contact strip (36) is fitted with an insulating sheath (62) over one part of the length thereof.

19. Accessory for apex locator apparatus according to any of claims 11 to 15, **characterized in that** the electrical connecting means include an induction coil (54) that extends around the endodontic tool (46).

20. Accessory for apex locator apparatus according to any of claims 16 to 19, **characterized in that** the second electrical contact strip (36) and the induction coil (54) can be connected on the fitting (16) or moulded in the mass thereof.

21. Accessory for apex locator apparatus according to any of claims 1 to 20, **characterized in that** the fitting (16) has a curved face to match the shape of the anterior face (18) of the tooth (14) against which said fitting is fixed.

22. Accessory for apex locator apparatus according to any of claims 1 to 21, **characterized in that** the fitting (16) is made of a biologically compatible material.

## Patentansprüche

1. Zubehör für Apex-Lokalisierungsvorrichtung, **dadurch gekennzeichnet, dass** es eine Halterung (16) umfasst, die mit Hilfe von Befestigungsmitteln (20, 50) an dem zu behandelnden Zahn oder an einem benachbarten Zahn gehalten wird und sowohl einerseits Mittel zum Übertragen eines Signals zwischen der Apex-Lokalisierungsvorrichtung (2) und einem endodontologischen Werkzeug (46) als auch andererseits Mittel zum Übertragen eines Signals zwischen dieser Vorrichtung und dem Zahn des Patienten umschließt.

2. Zubehör für Apex-Lokalisierungsvorrichtung nach Anspruch 1, **dadurch gekennzeichnet, dass** die Signalübertragungsmittel Mittel zur drahtlosen Übertragung sind.

3. Zubehör für Apex-Lokalisierungsvorrichtung nach Anspruch 2, **dadurch gekennzeichnet, dass** die Halterung (16) wenigstens eine Schaltung (56) zum Messen des physikalischen Parameters, der mit der relativen Position des endodontologischen Werkzeugs (46) und des Apex des zu behandelnden Zahns in Beziehung steht, umfasst, wobei diese Messschaltung (56) einer Sender/Empfänger-Schaltung (56) für den Austausch von Signalen mit der Apex-Lokalisierungsvorrichtung (2) zugeordnet ist.

4. Zubehör für Apex-Lokalisierungsvorrichtung nach Anspruch 3, **dadurch gekennzeichnet, dass** die Messschaltung (56) und die Sender/Empfänger-Schaltung (58) jeweils Schaltungen sind, die induktiv versorgt werden.

5. Zubehör für Apex-Lokalisierungsvorrichtung nach Anspruch 3, **dadurch gekennzeichnet, dass** die Halterung (16) ihre eigene Energiequelle enthält.

6. Zubehör für Apex-Lokalisierungsvorrichtung nach Anspruch 1, **dadurch gekennzeichnet, dass** es erste Mittel (36, 54) für die elektrische Drahtverbindung (44) zwischen der Apex-Lokalisierungsvorrichtung (2) und dem endodontologischen Werkzeug (46) und zweite Mittel (28, 52) für die elektrische Drahtverbindung (34) zwischen der Vorrichtung (2) und dem Patienten umfasst.

7. Zubehör für Apex-Lokalisierungsvorrichtung nach einem der Ansprüche 1 bis 6, **dadurch gekennzeichnet, dass** die Halterung (16) mittels einer Klemmlasche (20) gehalten wird.

8. Zubehör für Apex-Lokalisierungsvorrichtung nach einem der Ansprüche 1 bis 6, **dadurch gekennzeichnet, dass** die Halterung (16) mittels eines verformbaren elastischen Teils (50) gehalten wird.

9. Zubehör für Apex-Lokalisierungsvorrichtung nach Anspruch 8, **dadurch gekennzeichnet, dass** das Halteteil (50) einen ersten Abschnitt (50a) umfasst, der sich an der hinteren Fläche (12) des Zahns (14) abstützt und der über einen Verbindungsabschnitt (50b) mit einem zweiten Abschnitt (50c) verbunden ist, der sich an der Halterung (16) abstützt, um diese gegen die vordere Fläche (18) des Zahns (14) gedrückt zu halten.

10. Zubehör für Apex-Lokalisierungsvorrichtung nach Anspruch 9, **dadurch gekennzeichnet, dass** das Halteteil (50) ein U-förmiges Teil ist.

11. Zubehör für Apex-Lokalisierungsvorrichtung nach einem der Ansprüche 6 bis 10, **dadurch gekennzeichnet, dass** die Halterung (16) ein erstes Kontaktplättchen (28), um den elektrischen Kontakt zwischen dem Patienten und der Apex-Lokalisierungsvorrichtung (2) herzustellen, und Mittel, um den Aufbau einer elektrischen Verbindung zwischen dem endodontologischen Werkzeug (46) und der Apex-Lokalisierungsvorrichtung (2) zu ermöglichen, umfasst, wobei sowohl das Kontaktplättchen (28) als auch die Mittel zur elektrischen Verbindung mit Drähten (34, 44) für die elektrische Verbindung verbunden sind, die die Apex-Lokalisierungsvorrichtung (2) mit der Halterung (16) verbinden.

12. Zubehör für Apex-Lokalisierungsvorrichtung nach Anspruch 11, wenn abhängig von Anspruch 7, **dadurch gekennzeichnet, dass** das erste Kontaktplättchen (28) mit der Klemmlasche (20) in Kontakt ist.

13. Zubehör für Apex-Lokalisierungsvorrichtung nach Anspruch 12, **dadurch gekennzeichnet, dass** die Halterung (16) eine Rinne (26) umfasst, in der die Klemmlasche (20) verläuft, wobei das erste Kontaktplättchen (28) in diese Rinne (26) mündet, um mit der Klemmlasche (20) in Kontakt zu gelangen.

14. Zubehör für Apex-Lokalisierungsvorrichtung nach Anspruch 11, wenn abhängig von einem der Ansprüche 8 bis 10, **dadurch gekennzeichnet, dass** das erste Kontaktplättchen (28) über den Zahn (14), an dem die Halterung (16) befestigt ist, mit dem verformbaren elastischen Teil (50) in Kontakt gelangt.

15. Zubehör für Apex-Lokalisierungsvorrichtung nach Anspruch 14, **dadurch gekennzeichnet, dass** die Halterung (16) einen metallischen Einsatz (52) umfasst, der die Sicherstellung der elektrischen Verbindung zwischen dem ersten Kontaktplättchen (28) und dem Zahn (14), an dem die Halterung (16) befestigt wird, ermöglicht.

16. Zubehör für Apex-Lokalisierungsvorrichtung nach einem der Ansprüche 11 bis 15, **dadurch gekennzeichnet, dass** die Mittel zur elektrischen Verbindung ein zweites Plättchen (36) für den elektrischen Kontakt umfassen.

17. Zubehör für Apex-Lokalisierungsvorrichtung nach Anspruch 16, **dadurch gekennzeichnet, dass** das zweite Plättchen (36) für den elektrischen Kontakt eine Lasche für elektrischen Kontakt ist, die sich tangential zu dem endodontologischen Werkzeug (46) erstreckt.

18. Zubehör für Apex-Lokalisierungsvorrichtung nach Anspruch 17, **dadurch gekennzeichnet, dass** das Plättchen (36) für elektrischen Kontakt auf einem Teil seiner Länge mit einer Isolierhülle (62) versehen ist.

19. Zubehör für Apex-Lokalisierungsvorrichtung nach einem der Ansprüche 11 bis 15, **dadurch gekennzeichnet, dass** die Mittel zur elektrischen Verbindung eine Induktionsspule (54) umfassen, die um das endodontologische Werkzeug (46) verläuft.

20. Zubehör für Apex-Lokalisierungsvorrichtung nach einem der Ansprüche 16 bis 19, **dadurch gekennzeichnet, dass** das zweite Plättchen (36) für elektrischen Kontakt und die Induktionsspule (54) mit der Halterung (16) verbunden oder in deren Masse gegossen sein können.

21. Zubehör für Apex-Lokalisierungsvorrichtung nach einem der Ansprüche 1 bis 20, **dadurch gekennzeichnet, dass** die Halterung (16) eine gekrümmte Fläche aufweist, um sich an die Form der vorderen Fläche (18) des Zahns (14), an der sie befestigt wird, anzuschmiegen.

22. Zubehör für Apex-Lokalisierungsvorrichtung nach einem der Ansprüche 1 bis 21, **dadurch gekennzeichnet, dass** die Halterung (16) aus einem biologisch kompatiblen Material verwirklicht ist.
